# EUROPEAN PATENT SPECIFICATION

(11) **EP 0 380 884 B1**
(45) Date of publication and mention of the grant of the patent: **22.12.1993**
(21) Application number: 89313513.7
(22) Date of filing: 22.12.1989
(51) Int. Cl.: E01F 13/00, B60D 1/60

(54) **A security post**
Sperrpfosten
Poteau de sécurité

(30) Priority: 23.12.1988 GB 8830125
(43) Date of publication of application: 08.08.1990
(73) Proprietor: Higginson, Barry, Warrington Cheshire (GB); Blundell, James Keith, Culcheth Warrington (GB)
(72) Inventor: Higginson, Barry, Warrington, Cheshire (GB)
(74) Representative: Ajello, Michael John

(56) References cited:
- EP-A- 0 105 621
- EP-A- 0 227 447
- EP-A- 0 303 414
- DE-A- 1 915 444
- DE-A- 3 222 550
- DE-A- 3 508 856
- DE-U- 8 614 159
- FR-A- 1 524 177
- FR-A- 1 585 054
- FR-A- 2 250 354
- FR-A- 2 259 187
- GB-A- 1 256 889
- GB-A- 2 125 084
- GB-A- 2 211 233
- US-A- 2 315 516
- US-A- 3 660 935
- US-A- 3 797 283
- US-A- 3 990 182
- US-A- 4 003 161
- US-A- 4 756 172

## Description

THIS INVENTION concerns a security post to be located, for example, within an entry to control vehicular access.

In locations such as private car parks there is often found a "retractable" post which may be lowered to permit vehicular access and then raised and locked to prevent access by unauthorised vehicles. Known devices of this kind consist of a post pivotally connected at its base to a fixed member so that it may be laid down flat against the ground to allow a vehicle to pass over it. The post is then raised to its upright position where it is locked by, for example, a pin passing through the post and the fixed base member to prevent further pivotal movement until the pin is removed.

A disadvantage of this kind of security post is that it is exposed to damage by the running over of heavy vehicles, and to vandalism, since it is permanently located above ground.

Another known device described in French patent publication no. FR 2259187, comprises a post which is retractable into a sleeve or tube buried in the ground. In this case the post may be released by a key-operated lock to enable it to be raised to and locked in, an exposed position upstanding from its sleeve or tube, or removed entirely therefrom by use of the key.

An object of the present invention is to provide a security post which in its inoperative or lowered position is locked so as to be inaccessible and unexposed, and thus it is prevented from becoming damaged, and in which unauthorised removal of the post is prevented.

According to the present invention, there is provided a security post comprising a tubular member to be located in the ground with its upper open end substantially level with the surface, a post slidably located within the tubular member between a first position in which it is at least substantially enclosed within the latter and a second position in which it is upstanding therefrom, means for locking the post in at least the second of said two positions, and a cover for the upper open end of the tubular member, characterised by latching means within the tubular member separate from the locking means, to prevent unauthorised removal of the post therefrom, and by aperture means to enable access for authorised release of said removal prevention means.

Preferably, the post is provided with a locking catch which may be operated to become physically engaged with the tubular member in the first or second position of the post, the catch being provided with a key operated lock and a handle to enable the user to grasp the post during its insertion into or withdrawal from the tubular member.

The locking catch conveniently consists of a horizontal cross bar located near the base of the post and rotatably mounted on and with a spindle extending longitudinally of the post and connected to the handle at the top, the cross bar in one position being enclosed within the post and in another position being exposed through a slot therein and thus engagable within one of a pair of slots vertically spaced in the wall of the tubular member.

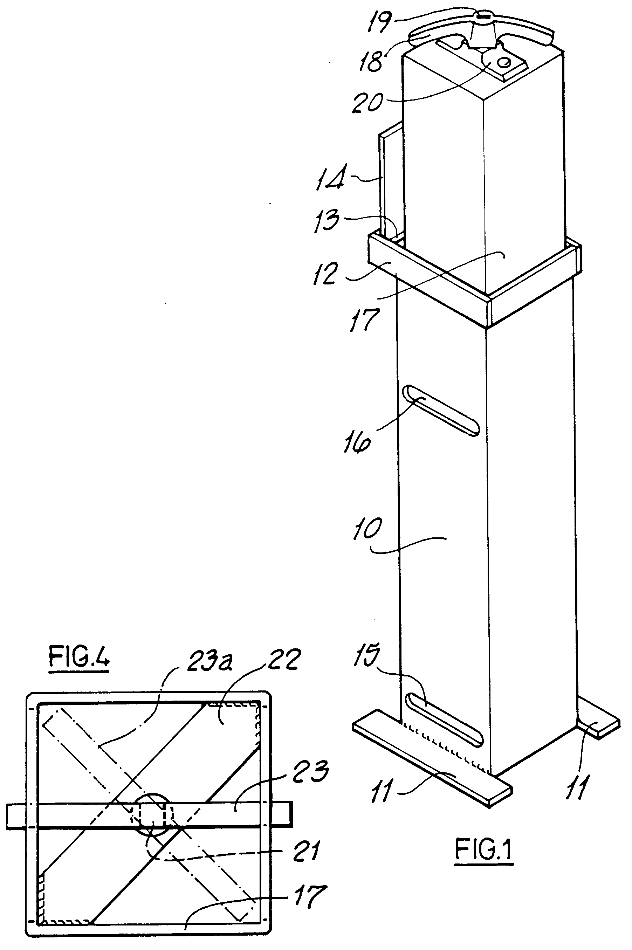

An embodiment of the invention will now be described, by way of example only, with reference to the accompanying drawings in which:-
Fig. 1 is an isometric view of a security post made in accordance with the invention and illustrating a tubular member with the post partially removed therefrom;
Fig. 2 is a part-sectional view showing the tubular member installed below ground;
Fig. 3 is a side elevation of a post to be slidably located within the tubular member of Fig. 2;
Fig. 4 is an underside view of the post;
Fig. 5 is a schematic isometric view of a security post illustrating an improvement thereto;
Fig. 6 is a partial elevation of the upper region of the post shown in Fig. 5;
Fig. 7 is a horizontal section taken on lines VII-VII of Fig. 6;
Fig. 8 is a schematic elevation of an assembly of locking caps adapted to be fitted to a line of spaced security posts, and providing a chain cordoned between them.

The security post comprises a square sectioned steel tube 10 having welded to the bottom of two opposed sides thereof a pair of anchor plates 11. The tube 10 is open at its base and at its top which is surrounded by a welded collar 12. Pivotally attached to the collar 12 through a hinge pin 13 is a closure flap 14 which in its closed position rests upon the upper edges of the walls of tube 10.

In the two opposed sides of tube 10 to which plates 11 are attached there are opposed pairs of vertically spaced slots 15 and 16 one near the base of the tube and the other spaced from the top by a distance approximately equal to a quarter of the length of the tube.

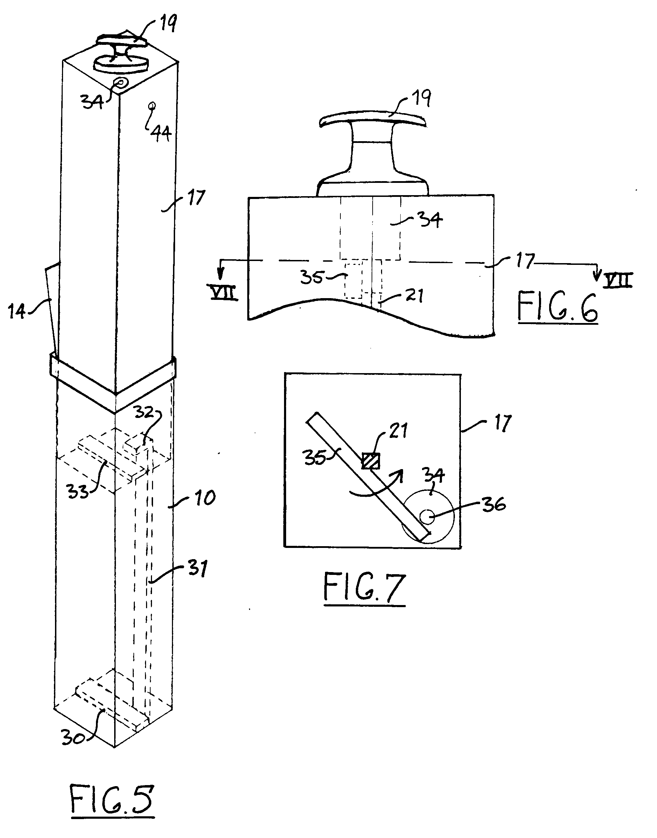

Slidably located within the tube 10 is a square sectioned tubular steel post 17. There is sufficient clearance between the post 17 and the inner wall surface of tube 10 to enable the post to be raised and lowered with ease. At the top of post 17 is a rotatable and lockable handle 18 incorporating a key operated lock 19. The handle 18 is rotatable within an upper bearing member 20 bolted to the top of post 17. A spindle 21 extends downwardly from handle 18 to a position close to the base of the post and is located thereat in a lower bearing member 22 in the form of a plate extending diagonally between two corner regions of the post and welded thereto. Welded or otherwise rigidly fixed to the bottom of spindle 21 just below plate 22 is a cross bar 23 which as can be seen in Fig. 4, upon rotation of handle 18 and spindle 21, is caused to move from a position 23a in which it is wholly enclosed within post 17 and extends diagonally across the latter, to a position in which it projects outwardly through a pair of opposed slots 24 in the wall of the post.

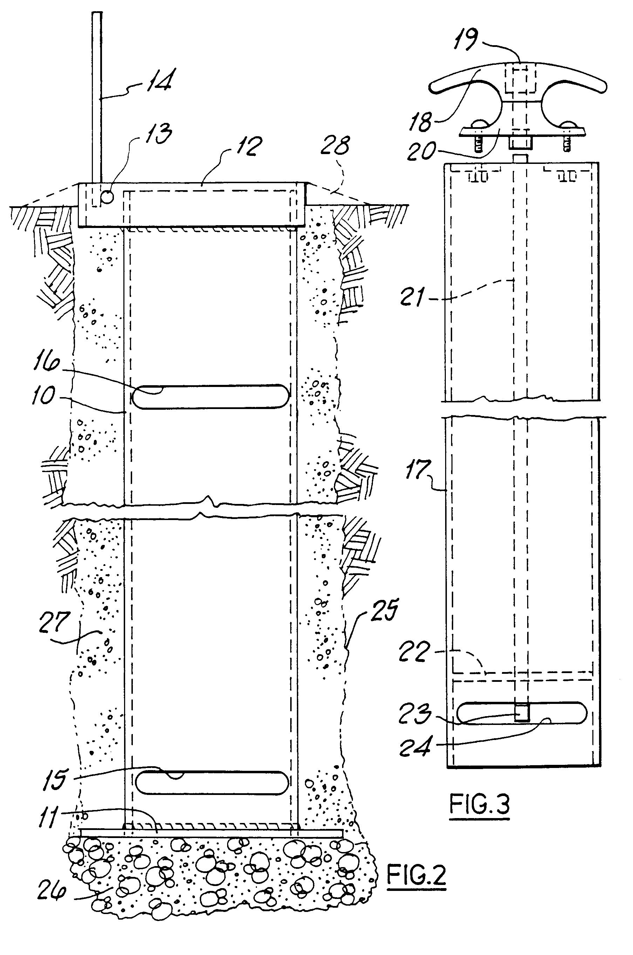

As can be seen from Fig. 2 the tube 10 is located within an excavation 25 in the ground which is wide enough to receive anchor plates 11 and long enough for almost the entire length of the device to be enclosed below ground and rest upon a bed 26 of aggregate or other drainage medium. Preferably, the top of collar 12 is exposed just above the surface so that when the excavation is back-filled with concrete 27 the entire installation can be finished with a cement ramp 28 around all four sides of the top of collar 12, which prevents damage to the edges thereof and permits drainage of water.

The entire length of post 17 and handle 18 is such that it may be wholly enclosed within tube 10 whereupon cover 14 may be pivoted into its horizontal closed position.

In use, with the device installed in an entry the post may be raised to its uppermost position and handle 18 turned to locate the cross bar 23 within opposed slots 16 in the wall of tube 10. The key may then be removed from lock 19 so that the post remains in the locked position to prevent vehicular access.

When required the device may be unlocked and the post lowered into the tube to enable vehicular access. Preferably, the handle is locked when the post is in its lowered position with bar 23 extending through slots 15. When the device is unlocked, post 17 may be entirely removed from tube 10, for cleaning, painting or replacement.

Prior to installation of the device slots 15 and 16 should be covered by a capping of sufficient depth to accommodate bar 23 but preventing the ingress of concrete when backfilling the excavation.

Whilst cover 14 largely prevents the ingress of rainwater, any which does seep down between post 17 and tube 10 may drain from the latter through the aggregate 26.

Whilst the device has been described for use to prevent vehicular access in car parks and the like, it may have many other applications. For example, a series of such posts installed in a row may be used to create a temporary barrier with chains or the like linking the tops of the posts when raised. In a further example the device may form a retractable standpipe with a hose or other flexible pipe connected to a tap at the top of the post.

In a still further application, the device may be used as a security fixing at each site in a caravan or other trailer park, wherein the top of the post includes a towing ball to which the standard towing bracket on the trailer may be hitched and locked. In this case, there may be no need for a fixed height since the trailer height is determined usually by supporting blocks, so the post may conveniently float freely in the tube.

It is not intended to limit the invention to the above details, many variations such as might readily occur to one skilled in the art being possible without departing from the scope of the invention.

For example, hinged cover 14 may be replaced by a watertight cover which fits over the entire collar 12.

In a further example the tube 10 and post 17 may be of circular or other cross-section in which case cross bar 23 must be retractable from slots 24 in a different manner.

In addition to slots 15 and 16 in tube 10 further slots may be provided at different levels to enable the post to be raised and locked at different heights.

Whilst the device has been described as made in steel, for some applications it may be, for example, of a rigid plastics material.

Referring now to Fig. 5 there is schematically shown a post 17 in a raised position in a tube 10. In order to prevent removal of the post from the tube a flat bar 30 is welded across the bottom of tube 10, and further welded to it is an upstanding bar 31 which terminates close to the top of the tube 10 in a short horizontal cross-member 32. Welded across the bottom of post 17 is a further bar 33 which engages with the underside of cross-member 32 to prevent the post from being removed. Conveniently, a small aperture is provided in the wall of tube 10 close to its upper end and corresponding with a similar aperture in post 17 such that authorised personnel can insert a tool to push vertical bar 31 laterally to release the post for maintenance or replacement.

It will be seen in Fig. 5 that the handle arrangement is disposed diagonally across the top of the post to leave room for a spring-loaded barrel lock 34 whose function will now be described.

Referring now to Figs. 6 and 7 the spindle 21 just inside the top of the post has welded to it a cross bar 35 which rotates with the spindle. In Fig. 7 the assembly is shown in the locked position with bar 35 located behind the pin 36 of barrel lock 34. Thus until lock 34 is released, preferably by a key, spindle 21 cannot rotate to unlock the post. Lock 34 may be provided in place of or in addition to the lock 19 in the handle part 18. Preferably, lock 34 is of the kind which is pressed inwardly against a spring to lock and is released by the turn of a key.

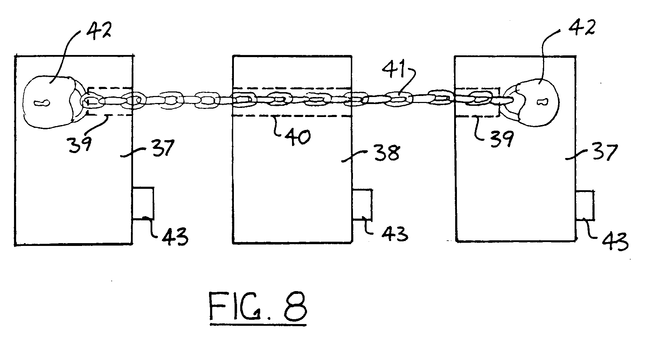

Referring now to Fig. 8 when a number of security posts made in accordance with the invention are installed in a line, for example across the entrance to a car park then it may be required to extend a cordon between them. To this end, a plurality of capping members 37 and 38 may be provided which will fit over the top of the posts in their raised position. Welded internally of capping member 37 is a short length of open-ended tube 39 whilst capping member 38 has a full width tube 40 welded therein. As can be seen from Fig. 8 it is therefore possible to pass a chain 41 through tubes 40 and 39 and to attach to the ends thereof padlocks or similar locking devices 42. The capping members 37 and 38 may then be placed over their respective security posts, and barrel locks 43 may be provided to retain them. In this case, the appropriate apertures such as shown at 44 in Fig. 5 will be provided in at least two sides of the post to receive the pins of barrel locks 43.

## Claims

1. A security post comprising a tubular member (10) to be located in the ground with its upper open end substantially level with the surface, a post (17) slidably located within the tubular member (10) between a first position in which it is at least substantially enclosed within the latter and a second position in which it is upstanding therefrom, means (18, 19, 34) for locking the post (17) in at least the second of said two positions, and a cover (14) for the upper open end of the tubular member (10), characterised by latching means (31, 32) within the tubular member (10) separate from the locking means (18, 19, 34), to prevent unauthorised removal of the post (17) therefrom, and by aperture means to enable access for authorised release of said removal prevention means (31, 32).

2. A security post according to Claim 1, wherein said locking means (18, 19, 34) enables the post (17) to be locked selectively in either of said two positions.

3. A security post according to Claim 1 or Claim 2, wherein said locking means comprises a locking catch (23) which may be operated to engage the tubular member (10) in the first or second position of the post (17), the catch being provided with a key operated lock (19) and a handle (18) to enable the user to grasp the post (17) for movement relative to the tubular member (10).

4. A security post according to Claim 3, wherein said locking catch (23) consists of a horizontal cross bar located near the base of the post (17) and mounted on a rotatable spindle (21) extending longitudinally of the post (17) and connected to the handle (18) at the top, the cross bar in one position being enclosed within the post and in another position being exposed through a slot (24) therein to engage within one of a pair of slots (15, 16) vertically spaced in the wall of the tubular member (10).

5. A security post according to any preceding claim, wherein said cover (14) for the open upper end of the tubular member is pivotally attached at one side thereof and is in the form of a closure flap which in its closed position rests upon the upper edges of the walls of the tubular member (10).

6. A security post according to any preceding claim, wherein the tubular member (10) is made from rectangular section steel tube having one or more anchor plates (11) welded to the open bottom end thereof.

7. A security post according to Claim 1, wherein said cover (14) fits over the entire upper end of the tubular member (10) to seal the latter.

8. A security post according to Claim 4, wherein the slots (15, 16) in said tubular member are capped to prevent the ingress of backfilling materials.

9. A security post according to Claim 1, wherein said tubular member (10) and said post (17) are of circular cross-section.

10. A security post according to any preceding claim, wherein the top of the post (17) includes a towing ball to which a standard towing hitch on, for example, a trailer or caravan may be located.

11. A security post according to Claim 1, wherein said latching means (31, 32) is fixed internally of said tubular member (10) and engages with a part (33) of the lower region of said post (17) to prevent the latter from being removed from the tubular member (10), and wherein said aperture means enables the insertion into the tubular member (10) of a tool adapted to disengage said latching means (31, 32) from said part (33).

12. A security post according to any preceding claim, including a capping member (37, 38) for attachment to the top of the post (17) in its second position and having locking means (43) for preventing unauthorised removal therefrom, said capping member (37, 38) including internal means (39, 40) for attachment of a chain (41) or like cordon to extend between such capping members (37, 38) applied to a plurality of spaced security posts.

## Patentansprüche

1. Ein Sicherheitspfosten, bestehend aus einem rohrförmigen Glied (10), das in den Boden gestellt wird, wobei sein oberes, offenes Ende im wesentlichen mit der Oberfläche auf gleichem Niveau ist, ein Pfosten (17), der im Innern des rohrförmigen Gliedes (10) gleitend gelagert ist zwischen einer ersten Stellung, worin er zumindest wesentlich in letzterem eingeschlossen ist, und einer zweiten Stellung, in der er daraus herausragt, Mittel (18, 19, 34) zum Verschließen des Pfostens (17) in zumindest der zweiten der genannten Stellungen, und eine Abdeckung (14) für das obere, offene Ende des rohrförmigen Glieds (10), gekennzeichnet durch Sperrvorrichtungen (31, 32) innerhalb des rohrförmigen Glieds (10) getrennt von den Verriegelungsvorrichtungen (18, 19, 34), um unbefugtes Entfernen des Pfostens (17) daraus zu verhindern, und durch Öffnungsvorrichtungen, um berechtigten Zugang zur Freigabe der erwähnten, das Entfernen verhindernden Vorrichtung (31, 32) zu gestatten.

2. Ein Sicherheitspfosten gemäß Anspruch 1, worin die erwähnte Verriegelungsvorrichtung (18, 19, 34) es ermöglicht, den Pfosten (17) wahlweise in einer der zwei genannten Stellungen zu verschließen.

3. Ein Sicherheitspfosten gemäß Anspruch 1 oder Anspruch 2, wonach die genannte Verriegelungsvorrichtung (18, 19, 34) einen verschließbaren Schnäpper (23) enthält, der betätigt werden kann, um das rohrförmige Glied (10) in der ersten oder zweiten Stellung des Pfostens (17) einzurücken, wobei der Schnäpper mit einem mit Schlüssel (19) zu betätigenden Schloß (19) und einem Griff (18) versehen ist, um es dem Benutzer zu gestatten, den Pfosten (17) zu ergreifen, um ihn im Verhältnis zu dem rohrförmigen Glied (10) zu bewegen.

4. Ein Sicherheitspfosten gemäß Anspruch 3, wobei der genannte, verschließbare Schnäpper (23) aus einer waagerechten Querstange besteht, die in der Nähe der Basis des Pfostens (17) angeordnet ist und auf einer drehbaren Spindel (21) montiert ist, die sich längs des Pfostens (17) erstreckt und oben mit dem Griff (18) verbunden ist, wobei die Querstange in einer Stellung im Innern des Pfostens eingeschlossen ist, und in einer anderen Stellung durch einen Schlitz (24) darin freigelegt wird, um in einen Schlitz eines Schlitzpaares (15, 16), das senkrecht in der Wand des rohrförmigen Gliedes (10) mit Abstand angeordnet ist, einzugreifen.

5. Ein Sicherheitspfosten gemäß einem der vorhergehenden Ansprüche, worin die genannte Abdeckung (14) für das offene, obere Ende des Röhrengliedes auf einer Seite desselben um einen Drehpunkt befestigt ist in Form einer Verschlußklappe, die in ihrer geschlossenen Stellung auf den oberen Kanten der Wände des rohrförmigen Gliedes (10) ruht.

6. Ein Sicherheitspfosten gemäß irgendeinem der vorhergehenden Ansprüche, worin das rohrförmige Glied (10) aus einem Stahlrohr mit rechteckigem Querschnitt hergestellt ist, das eine oder mehrere Ankerplatten (11) besitzt, die auf das offene, untere Ende desselben aufgeschweißt sind.

7. Ein Sicherheitspfosten gemäß Anspruch 1, worin die erwähnte Abdeckung (14) über das gesamte obere Ende des rohrförmigen Gliedes (10) paßt, um letzteres abzudichten.

8. Ein Sicherheitspfosten gemäß Anspruch 4, worin die Schlitze (15, 16) in dem genannten rohrförmigen Glied abgedeckt werden, um das Eindringen von Verfüllungsmaterialien zu verhindern.

9. Ein Sicherheitspfosten gemäß Anspruch 1, worin das erwähnte rohrförmige Glied (10) und der genannte Pfosten (17) einen runden Querschnitt haben.

10. Ein Sicherheitspfosten gemäß irgendeinem der vorausgehenden Ansprüche, worin die Oberseite des Pfostens (17) einen Zugball mit einschließt, an den eine standardmäßige Anhängekupplung beispielsweise eines Anhängers oder Wohnwagens angebracht werden kann.

11. Ein Sicherheitspfosten gemäß Anspruch 1, worin die erwähnte Sperrvorrichtung (31, 32) im Innern des genannten rohrförmigen Gliedes (10) befestigt ist und ein Teil (33) des unteren Bereichs des genannten Pfostens (17) einrastet, um den letzteren daran zu hindern, daß er von dem rohrförmigen Glied (10) entfernt werden kann, und worin die genannte Öffnungsvorrichtung das Einstecken eines entsprechend angepaßten Werkzeuges in das rohrförmige Glied (10) gestattet, um die genannte Sperrvorrichtung (31, 32) von dem genannten Teil (33) auszurasten.

12. Ein Sicherheitspfosten gemäß irgendeinem der vorausgehenden Ansprüche, wozu ein Abdeckglied (37, 38) gehört zur Befestigung an den Oberteil des Pfostens (17) in seiner zweiten Stellung und mit Verriegegelungsvorrichtungen (43), um unbefugte Entfernung davon zu verhindern, wobei das genannte Abdeckglied (37, 38) interne Vorrichtungen (39, 40) einschließt für die Befestigung einer Kette (41) oder ähnlichen Absperrung, die sich zwischen solchen Abdeckgliedern (37, 38) spannt, die auf eine Vielzahl in Abständen aufgestellter Sicherheitspfosten angewandt sind.

## Revendications

1. Un poteau de sécurité se composant d'un élément tubulaire (10) à placer dans la terre, son extrémité supérieure ouverte étant substantiellement de niveau avec la surface, un poteau (17) à faire glisser dans l'élément tubulaire (10) entre une première position dans laquelle il est au moins substantiellement enfermé dans le premier et une seconde position dans laquelle il tient verticalement, des moyens (18, 19, 34) pour verrouiller le poteau (17) au moins dans la seconde des deux positions en question, et un couvercle (14) pour l'extrémité supérieure ouverte de l'élément tubulaire (10), caractérisé par des moyens d'accrochage (31, 32) dans l'élément tubulaire (10), indépendants des moyens de verrouillage (18, 19, 34) pour empêcher le retrait illicite du poteau (17), et par des moyens d'ouverture qui permettent l'accès aux fins de retrait autorisé des moyens préventifs du retrait en question (31, 32).

2. Un poteau de sécurité selon la Revendication 1, dans lequel les moyens de verrouillage (18, 19, 34) permettent au poteau (17) d'être verrouillé de manière sélective dans l'une ou l'autre des deux positions.

3. Un poteau de sécurité selon la Revendication 1 ou la Revendication 2, dans lequel lesdits moyens de verrouillage comprennent un dispositif à serrure (23) qui peut être actionné pour enclencher l'élément tubulaire (10) dans la première ou la seconde position du poteau (17), le dispositif étant muni d'une serrure à clé (19) et d'une poignée (18) pour permettre à l'utilisateur d'empoigner le poteau (17) afin de le faire bouger par rapport à l'élément tubulaire (10).

4. Un poteau de sécurité selon la Revendication 3, dans lequel ledit dispositif de serrure (23) comporte une tige transversale horizontale située près de la base du poteau (17) et montée sur une broche rotative (21), se prolongeant longitudinalement par rapport au poteau (17) et reliée à la poignée (18) dans le haut, la tige transversale dans une position étant exposée grâce à une fente (24) de manière à s'enclencher dans deux fentes (15, 16), espacées verticalement dans la paroi de l'élément tubulaire (10).

5. Un poteau de sécurité selon n'importe laquelle des revendications précédentes, dans lequel le couvercle en question (14) destiné à l'extrémité supérieure ouverte de l'élément tubulaire est fixé de manière pivotante d'un côté dudit élément et il est sous forme d'un rabat de fermeture qui, dans sa position fermée, repose sur les bords supérieurs des parois de l'élément tubulaire (10).

6. Un poteau de sécurité selon n'importe laquelle des revendications précédentes, dans lequel le membre tubulaire (10) consiste en un profilé en acier carré, ayant une ou plusieurs plaques de fixation (11) soudées à l'extrémité inférieure ouverte du même.

7. Un poteau de sécurité selon la Revendication 1, dans lequel ledit couvercle (14) s'adapte au-dessus de toute l'extrémité supérieure de l'élément tubulaire (10) afin de fermer hermétiquement ce dernier.

8. Un poteau de sécurité selon la Revendication 4, dans lequel les fentes (15, 16) dans l'élément tubulaire en question, sont munies de chapeaux pour éviter la pénétration de matériaux.

9. Un poteau de sécurité selon la Revendication 1, dans lequel ledit élément tubulaire (10) et ledit poteau (17) ont une coupe transversale circulaire.

10. Un poteau de sécurité selon n'importe laquelle des revendications précédentes, dans lequel le haut du poteau (17) comprend une boule de remorquage à laquelle s'accroche un véhicule standard de remorquage, par exemple, une remorque ou une caravane.

11. Un poteau de sécurité selon la Revendication 1, dans lequel lesdits moyens de verrouillage (31, 32) sont fixés à l'intérieur dudit élément tubulaire (10) et s'enclenchent avec une partie (33) inférieure dudit poteau (17) pour empêcher ce dernier d'être retiré de l'élément tubulaire (10), et dans lequel ladite ouverture permet l'insertion dans l'élément tubulaire (10) d'un outil adapté pour dégager lesdits moyens de verrouillage (31, 32) de la pièce en question (33).

12. Un poteau de sécurité selon n'importe laquelle des revendications précédentes, y compris un couvercle (37, 38) pour attacher le haut du poteau (17) dans sa seconde position et ayant un moyen de verrouillage (43) pour empêcher le retrait illicite du poteau en question, ledit couvercle (37, 38) comprenant des moyens internes (39, 40) pour attacher une chaîne (41) ou corde similaire qui se prolongerait entre le couvercle (37, 38), et appliquée à plusieurs poteaux de sécurité espacés.
